(19) Europäisches Patentamt
European Patent Office
Office européen des brevets

(11) **EP 2 505 825 A2**

(12) **EUROPEAN PATENT APPLICATION**

(43) Date of publication:
**03.10.2012 Bulletin 2012/40**

(51) Int Cl.:
***F03D 1/06*** (2006.01)

(21) Application number: **12001721.5**

(22) Date of filing: **14.03.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **29.03.2011 ES 201100358**<br><br>(71) Applicant: **Gamesa Innovation & Technology, S.L.**<br>**31621 Sarriguren (ES)** | (72) Inventors:<br>• **Caso Prieto, Javier**<br>  **28043 Madrid (ES)**<br>• **Saez Moreno, Alejandro**<br>  **31621-Sarriguen (Navarra) (ES)**<br>• **Garcia Andujar, Juan Carlos**<br>  **28043 Madrid (ES)**<br>• **Sancet Ezpelta, Aitor**<br>  **31621-Sarriguen (Navarra) (ES)**<br>• **Lopez Diez, Jesus**<br>  **28040 Madrid (ES)** |

(54) **Wind turbine with a broadband damping device in each blade**

(57)     Wind turbine comprising one or more blades, incorporating in each blade a damping device comprising a first damping element tuned at the main resonance frequency of the blade $\Omega o$ and K additional damping elements tuned at frequencies $\Omega 1$, $\Omega 2$, ... $\Omega k$ so that in the event of blade vibrations its amplitude A is reduced in a percentage Y of the amplitude Ao at the main resonance frequency of the blade $\Omega o$ in a band extended above and below the main resonance frequency of the blade $\Omega o$ in a percentage X of $\Omega o$, said frequencies $\Omega 1$, $\Omega 2$, ... $\Omega k$ being comprised within said band.

**FIG. 3**

EP 2 505 825 A2

## Description

### FIELD OF THE INVENTION

The invention relates to a wind turbine with a damping device in each blade and, more in particular, to a wind turbine with a broad-band damping device in each blade.

### BACKGROUND

Wind turbines are devices that convert mechanical wind energy to electrical energy. A typical wind turbine includes a nacelle mounted on a tower housing a drive train for transmitting the rotation of a rotor to an electric generator and other components such as a yaw drive which orientates the wind turbine, several actuators and sensors and a brake. The rotor supports a number of blades extending radially there from for capturing the kinetic energy of the wind and causing the driving train rotational motion. The rotor blades have an aerodynamic shape such that when a wind blows across the surface of the blade, a lift force is generated causing the rotation of a shaft which is connected - directly or through a gearing arrangement- to the electrical generator located inside the nacelle. The amount of energy produced by wind turbines depends on the rotor blade sweeping surface that receives the action from the wind and consequently increasing the length of the blades leads normally to an increase of the power output of the wind turbine. The blades are controlled to stay in autorotation regime during normal phase, and its attitude depends on the wind intensity.

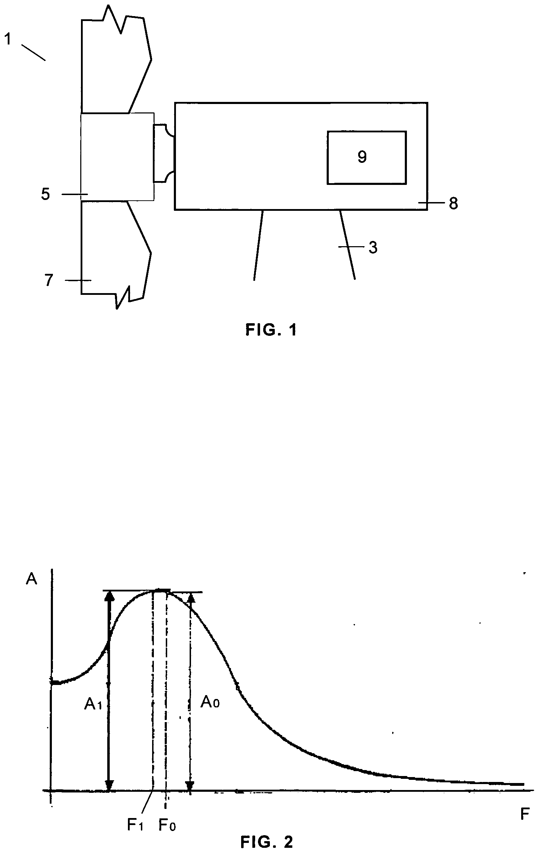

Increasing blade size has drawbacks in terms of aeroelastic response as the general tendency is that structural damping reduces with blade length. Due to that lessening, the dynamic response of the blade at the natural frequencies increases proportionally to the inverse of the damping ratio, and also depends on the proximity with the vortex shedding frequency. A typical diagram Amplitude - Relative Frequency for a structure is shown in Figure 2 highlighting the amplitude $A_0$ at the frequency of resonance $F_0$ and the maximum amplitude $A_1$ at a frequency $F_1$.

Therefore it is convenient from the point of view of structural integrity and/or cost optimization to include somehow additional damping in blades so that dynamic loads could be reduced. It could be particularly interesting when by the combination of aerodynamic conditions and structural characteristic, the blades total damping is reduced (aerodynamic plus structural) and even could possibly enter in a negative aerodynamic damping values area for the relevant eigenmodes. That could happen when relevant airfoils in the blades are in stalled condition where the lift slope is negative. This condition may happen for stall regulated wind turbines during normal production, but also in variable pitch wind turbines when parked or in idling situations with high incidence angles.

There are a number of patent documents disclosing damping devices for wind turbine blades such as WO 95/21327, WO 02/08114, WO 99/32789 and US 6,626.642.

A general drawback of those damping devices is that they are not designed taking into account that, for a given wind turbine model, there is a significant variability of the structural or aerodynamic properties of the blades due to tolerances which involves a significant variability of its efficiency.

The present invention focuses on finding a solution for these drawbacks.

### SUMMARY OF THE INVENTION

It is an object of the present invention to provide wind turbines blades with an effective damper device in spite of the variability of the blades structural or aerodynamic properties due to tolerances.

It is another object of the present invention to provide wind turbines blades with a damper device that allow loads reduction and/or to extend the wind conditions that blades can stand without higher risks regarding structural integrity.

It is another object of the present invention to provide wind turbines blades with a damper device that allows lessening the blade weight.

These and other objects are met by a wind turbine comprising one or more blades, each blade incorporates a damping device comprising a first damping element tuned at the main resonance frequency of the blade $\Omega_o$ and $K$ additional damping elements tuned at frequencies $\Omega_1$, $\Omega_2$, ... $\Omega_k$ so that in the event of blade vibrations its amplitude $A$ is reduced in a percentage Y of the amplitude $A_o$ at the main resonance frequency of the blade $\Omega_o$ in a band extended above and below the main resonance frequency of the blade $\Omega_o$ in a percentage $X$ of $\Omega_o$, said frequencies $\Omega_1$, $\Omega_2$, ... $\Omega_k$ being comprised within said band.

In embodiments of the invention, said damping device is placed in a blade section where the twist is 0° in order to attenuate edgewise vibrations, or in a blade section with a predefined twist in order to attenuate both edgewise and flapwise vibrations, or in a blade section on the location of the second edgewise vibration modal shape to avoid excitation of hybrid vibration modes. Hereby there are achieved efficient damping devices for wind turbines subjected to different vibration modes.

In embodiments of the present invention, the number of said additional damping elements is two. It is considered that two additional damping elements is a reasonable number of elements for achieving satisfactory results in wind turbine blades that on the other side facilitates the optimization process for obtaining the parameters of modal mass m, modal stiffness k and damping coefficients c of the damping elements.

In embodiments of the present invention said percentage $X$ is lesser than 15% or even lesser than 11%. The corresponding bands are suitable bands for assuring for a wide range of blades a sufficient reduction of its dynamic response irrespective of tolerance variations of blades of the same model.

In embodiments of the present invention said percentage Y is lesser than 40% or even lesser than 21%. It is considered that these limits may be achieved with suitable dimensioned damping elements, and shall cause an adequate load and deflections reduction, allowing an improvement of the blade performances.

Other features and advantages of the present invention will be understood from the following detailed description of illustrative and by no means limiting embodiments of its object in relation with the enclosed drawings.

## BRIEF DESCRIPTION OF DRAWINGS

Figure 1 is a schematic section side view of a wind turbine.
Figure 2 shows the typical dynamic response of a structure.
Figure 3 shows the response of a structure with and without one damper element tuned at the natural frequency,
Figure 4 adds to Figure 3 the response of a structure with two damper devices having more than one damper element.
Figure 5 shows a detailed energy diagram of a blade having a damping device with K damping elements.
Figure 6 shows the filapwise and edgewise directions.
Figure 7 shows the frequency response of a blade with and without a damping device according to this invention.
Figure 8 shows the reduction of loads due to damping coefficient rise.

## DETAILED DESCRIPTION OF PREFERRED EMBODIMENTS

As shown in Figure 1, a typical wind turbine comprises a tower 3 supporting a nacelle 8 housing a generator 9 for converting the rotational energy of the wind turbine rotor into electrical energy. The wind turbine rotor comprises a rotor hub 5 and, typically, three blades 7. The rotor hub 5 is connected either directly or through a gearbox to the generator 9 of the wind turbine for transferring the torque generated by the rotor 5 to the generator 9 and increase the shaft speed in order to achieve a suitable rotational speed of the generator rotor.

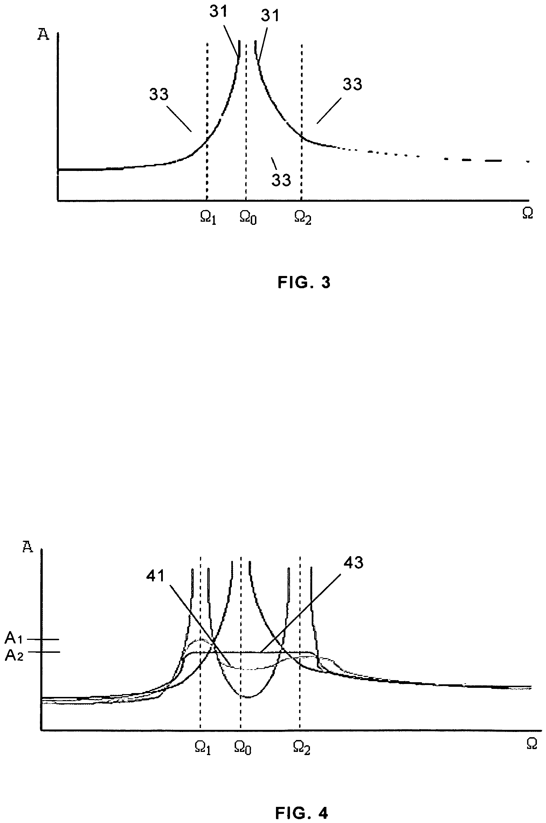

The response of a structure such as the blade of a wind turbine to an excitation is a vibration with the features shown in the curve 31 of Figure 3 with maximum amplitude at the structure natural frequency $\Omega_0$, which depends on the structure characteristics.

If the structure has a damping element properly adjusted to said natural frequency $\Omega_0$, the response of the system is that shown by curve 33 in Figure 3 with an amplitude attenuation at said natural frequency $\Omega_0$ (the reduction depends on the damping capacity of said damping element) but with an amplitude increase at frequencies $\Omega_1$ and $\Omega_2$, close to $\Omega_0$.

Thus, the basic idea of the present invention is adding more damping elements tuned at frequencies near to the natural frequency $\Omega_0$ to diminish the amplitude of the response until a maximum is not exceeded for a certain range of frequencies as shown by curves 41 and 43 of Figure 4 with, respectively, maximum amplitudes of $A_1$ and $A_2$ corresponding to damping devices with several elements. The effect of the combination of certain number of damping elements does not produce exclusively a lineal superposition of the effect of each one but also a synergic effect of amplitude attenuation in a certain range of frequencies around the natural frequency $\Omega_0$ and a reduction of blade loads.

The determination of the number and properties, i.e. mass m, stiffness k and damping coefficient c of said damping elements, needed for achieving an adequate attenuation in the desired range of frequencies is made in an optimization process addressed to:

- making an accurate adjustment of the resonance frequency of the system;
- dissipating the energy needed in order to achieve the required load reduction.

Some theoretical explanation of how the energy is transferred from the blade to the damper for achieving a blade oscillation (and loads) reduction follows.

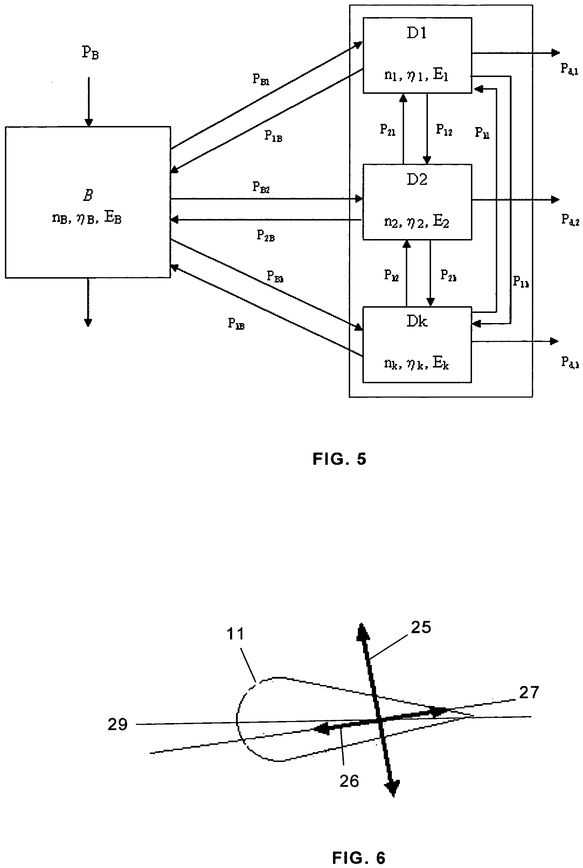

Figure 5 show all the possible Interactions between a blade *B* and the damping elements *D1, D2 ... Dk* when the blade is subjected to a Power Input $P_B$ that are considered In said optimization process:

- Dissipated Power at the blade $P_{d,B.}$
- Transmitted Power between the blade *B* and the damping elements *D1, D2 ...Dk:*- $P_{B1,}$ $P_{B2}$, $P_{Bk}$.
- Received Power at the blade *B* from the damping elements *D1, D2 ... Dk:* $P_{1B}$, $P_{2B}$, $P_{kB}$,
- Transmitted and Received Power between damping elements *D1, D2 ...Dk:* $P_{12}$, $P_{1K}$, $P_{2k}$; $P_{21}$, $P_{K1}$, $P_{k2}$.
- Dissipated Power at the damping elements *D1, D2 ...Dk:* $P_{d,1}$, $P_{d,2}$, $P_{d,k}$.

Considering different generic subsystems l and j (l≠j) where i or j corresponds to B for the blade, and 1...k for the different damping elements, the key parameters are:

- Power dissipated by subsystem I: $P_{i,d} = \omega \eta_i E_i$
- Power interchanged between subsystems I and j: $P_{ij} = \omega \eta_{ij} E_i - \omega \eta_{ji} E_j$
- Reciprocity relation: $n_i \eta_{ij} = n_j \eta_{ji}$

- Power balance for each subsystem:

$$P_i = P_{i,d} + \sum_{j=1, l \neq j}^{k} P_{ij}$$

where:

$P_i$ is the power introduced in each subsystem by an external excitation. In this case this parameter represents the power entering In the blade by the aerodynamic loads, $P_B$.

$$P_B = \int_{t=0}^{t=T_\omega} \int_{r=0}^{r=R} F_a(r,t) \cdot \delta \dot{u}(r,t)$$

where $T_\omega$ is the period of oscillation related to the eigenfrequency $\omega$, $F_a$ is the vector of the aerodynamic forces acting on the blade and $\dot{u}$ is the vector of the modal displacements.

$\eta_i$ is the internal losses factor of subsystem i. Represents the percentage of losses produced when the entering power is converted into energy in the blade or the damping elements. This factor represents the damping level in each subsystem, so it can be expressed as $\eta_i = 2\gamma_i = 2C_i/C_{i,crit}$ and

$$C_{i,crit} = 2\sqrt{k_i m_i}$$

$\eta_{ij}$ is the coupling loss factor between subsystem i and j. The power transmitted between interconnected subsystems can be considered proportional to the energy in each subsystem (blade or damping element). The $\eta_{ij}$ parameters depend on the blade and damping elements structural characteristics and can be obtained analytically or by mathematical computational models (as FEM).

$n_i$ is the modal density for subsystem i, that represents the average number of resonant eigenmodes in a subsystem i by frequency band unity. In general for a blade is around 2 in the band of interest (lower frequency modes), and 1 for the damping devices.

The parameters that are optimized to obtain the adequate damper device for a specific blade are therefore the interaction factors between blade and damping elements and the interaction factors between the damping elements and their internal losses factors, which are directly related to their corresponding damping factors $\gamma_i$.

The damping device according to this invention comprises therefore several damping elements whose parameters of mass m, stiffness k and damping coefficient c are established according to the blade characteristics, in order to diminish main vibration modes. When the blade movement has a relevant contribution to a specific frequency band and the damper device has been properly adjusted for that band, part of the blade energy is transferred to the damping device, so that the blade movement is attenuated. This happens because the damper dissipates energy of the movement, so it reduces the amplitude of the oscillations of the blade.

Two main vibration modes occur on a wind turbine blade: flapwise vibration 25 and edgewise vibration 26 as shown in Figure 6. Edgewise movements are kept in the direction trailing edge - where the wind arrives to the blade - to leading edge - where the wind leaves-. Flapwise vibrations 25 are perpendicular to edgewise ones 26. This appointment is considered bearing in mind the main zero-lift line 27 of the whole blade, not the zero-lift line 29 of the profile at a determined section (there is some twist of the profiles when moving to the tip).

The damping device according to this invention is intended to act over the amplitude of the blade vibration on a broad-band of frequencies around the main vibration modes, i.e. the flap and edge first vibration modes, that have the higher amplitude, for reducing the fatigue load.

Regarding the position of the damping device according to this invention several criteria shall be taken into account such as space limitations inside the blade, inertia loads added to the blade depending on the mass and position of the damping device, desired effects over the vibration modes and secondary effects due to the installation of the damping device.

Suitable positions of the damping device can be the following:

- A blade section where the twist, i.e. the angle between the zero-lift profile line 29 and the main zero-lift line 27, is 0° in order to attenuate edgewise vibrations.

- A blade section with a predefined twist in order to attenuate both edgewise and flapwise vibrations, or only edgewise ones, depending on requirements of each blade.

- A blade section on the location of the second edgewise vibration modal shape to avoid excitation of hybrid vibration modes. This section is usually located in the second third of the blade.

In a preferred embodiment of the present invention the damping device comprise a first damping element tuned at the main resonance frequency of the blade $\Omega_o$ and 2 additional damping elements tuned at frequencies $\Omega_1, \Omega_2$.

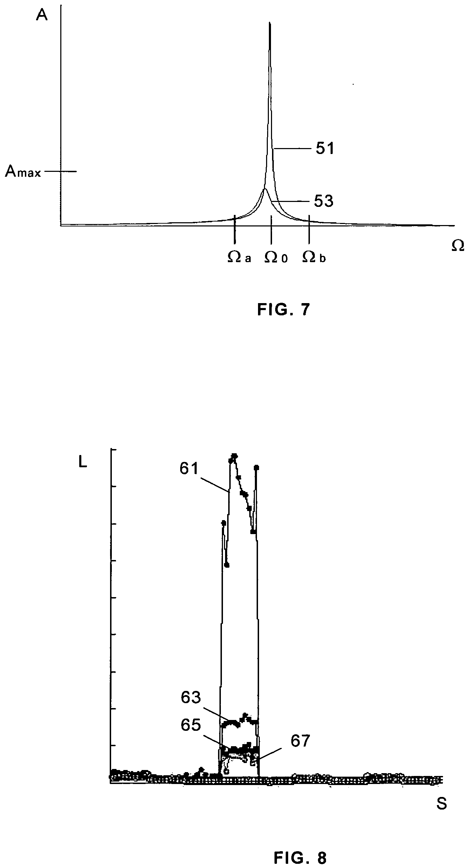

The response of the blade near to main vibration frequencies with and without a damper device according to this preferred embodiment is that represented by, respectively, curves 53 and 51 in Figure 7. Therefore the damper device allows an amplitude reduction below a predetermined limit $A_{max}$ in the desired frequency band

$\Omega_a$- $\Omega_b$, where $\Omega_a = \Omega_o$ - X% * $\Omega_o$ and $\Omega_b = \Omega_o$ + X% * $\Omega_o$

Preferably said percentage X% is lesser than 15% or even that 11% and the bands so defined cover a frequency band wide enough to cope up with fabrication deviations and give to the damping device a sufficient margin to act properly on different ambient conditions. Within said bands the frequencies $\Omega_1$, $\Omega_2$. of the additional damping elements shall be properly selected for achieving the synergic effect above-mentioned, i.e. acting as a broad-band damper device instead of the sum of three individual damping elements.

Preferably said predetermined limit of $A_{max}$ is lesser than the 40% or even the 25% of the amplitude $A_o$ at the main resonance frequency of the blade $\Omega_o$ without any damping element.

The reduction achieved in the amplitude of the vibration avoids, on one side, structural risks for the blade and, on the other side, allows the blade to cope with higher loads. This is based on the fact that as blades are flexible components, loads have always a queasy-steady component (related to wind speed among other parameters) and a dynamic component (e.g. coming from air gusts) that is directly related to total damping (structural and aerodynamic). If damping is increased, the dynamic loading can be reduced, that allows increasing queasy-steady loading (allowable maximum wind speed) without exceeding total loads on the blade. Alternatively, just increasing damping maintaining the dimensioning wind conditions allows optimizing the blade structure (weight and cost) as aforementioned.

The effect of the damping device according to this invention is not only reducing blade deflections at certain frequencies. Also loads over the blade lessen, so adding dampers is a clear improvement. Figure 8 shows reduction of loads L over a blade for different simulations S, with cases 63, 65, 67 increasing damping coefficient with respect to the case 61 of a blade without a damping device.

The above-mentioned quantitative information regarding the preferred embodiment of the damping device with three damping elements tuned at frequencies $\Omega_0$, $\Omega_1$, $\Omega_2$ has been obtained in a detailed parametric study and has been verified by experimental tests.

A damping device according to this invention is a suitable damping device for stall regulated wind turbines during normal operation and to stall regulated and pitch regulated wind turbines when parked or in idling situations with high incidence angles.

Although the present invention has been fully described in connection with preferred embodiments, it is evident that modifications may be introduced within the scope thereof, not considering this as limited by these embodiments, but by the contents of the following claims.

**Claims**

1. Wind turbine comprising one or more blades, **char-**

**acterized in that** each blade incorporates a damping device comprising a first damping element tuned at the main resonance frequency of the blade $\Omega_o$ and K additional damping elements tuned at frequencies $\Omega_1$, $\Omega_2$, ... $\Omega_k$ so that in the event of blade vibrations its amplitude A is reduced in a percentage Y of the amplitude $A_o$ at the main resonance frequency of the blade $\Omega_o$ in a band extended above and below the main resonance frequency of the blade $\Omega_o$ in a percentage X of $\Omega_o$, said frequencies $\Omega_1$, $\Omega_2$, ... $\Omega_k$ being comprised within said band.

2. Wind turbine according to claim 1, wherein said damping device is placed in a blade section where the twist is 0° in order to attenuate edgewise vibrations.

3. Wind turbine according to claim 1, wherein said damping device is placed in a blade section with a predefined twist in order to attenuate both edgewise and flapwise vibrations.

4. Wind turbine according to claim 1, wherein said damping device is placed in a blade section on the location of the second edgewise vibration modal shape to avoid excitation of hybrid vibration modes.

5. Wind turbine according to any of claims 1-4, wherein the number of said additional damping elements is two.

6. Wind turbine according to claim 5, wherein said percentage X is lesser than 15%.

7. Wind turbine according to claim 6, wherein said percentage X is lesser than 11%.

8. Wind turbine according to any of claims 5-7, wherein said percentage Y is lesser than 40%.

9. Wind turbine according to claim 8, wherein said percentage Y is lesser than 25%.

10. Wind turbine according to any of claims 1-9, wherein its regulation system is a stall regulation system.

11. Wind turbine according to any of claims 1-9, wherein its regulation system is a pitch regulation system.

FIG. 1

FIG. 2

6

FIG. 3

FIG. 4

**FIG. 5**

**FIG. 6**

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9521327 A
- WO 0208114 A
- WO 9932789 A
- US 6626642 B